**Europäisches Patentamt**

**European Patent Office**

**Office européen des brevets**

(11) Veröffentlichungsnummer: **0 064 769**

**B1**

# (12) EUROPÄISCHE PATENTSCHRIFT

(45) Veröffentlichungstag der Patentschrift:
**13.08.86**

(21) Anmeldenummer: **82104147.2**

(22) Anmeldetag: **12.05.82**

(51) Int. Cl.⁴: **F 24 F 13/14**

(54) **Lüftungsvorrichtung mit Klappen zum Regulieren der Luftmenge.**

(30) Priorität: **12.05.81 DE 3118823**

(43) Veröffentlichungstag der Anmeldung:
**17.11.82 Patentblatt 82/46**

(45) Bekanntmachung des Hinweises auf die Patenterteilung:
**13.08.86 Patentblatt 86/33**

(84) Benannte Vertragsstaaten:
**FR IT NL**

(56) Entgegenhaltungen:
**DE-A-2 040 641**
**FR-A-2 046 916**
**FR-A-2 174 906**
**GB-A-1 185 367**
**US-A-3 592 240**

(73) Patentinhaber: **E. Schmitz KG + Schoeller Kunststoff- Zentrale GmbH, Max- Planck- Strasse 15- 17, D-5000 Köln 40 (DE)**

(72) Erfinder: **Wallraff, Wilfried, Wiesenstrasse 28, D-5042 Erftstadt (DE)**

(74) Vertreter: **Patentanwälte Dr. Solf & Zapf, Asamstrasse 8, D-8000 München 90 (DE)**

**Beschreibung**

Die Erfindung betrifft eine Lüftungsvorrichtung zur Belüftung von Räumen mit einem Lüftungsgitter mit in Abstand voneinander angeordneten, fest installierten Stegen und zwei formgleich ausgebildeten, sich an Innenkanten gegenüberliegenden und mittels einer das Lüftungsgitter in Luftstromrichtung durchsetzenden Verstelleinrichtung stufenlos schwenkbaren Abdeckplatten, die die durch die Lüftungsvorrichtung strömende Luft regulieren.

Aus den DE-U-7608418 ist eine Lüftungsvorrichtung bekannt, bei der die Lüftungsschlitze durch verschwenkbare, übereinander angeordnete Lamellen abgedeckt sind. Die Abdecklamellen sind so um ihre Achse verschwenkbar, daß sie die Lüftungsschlitze völlig abdecken können. Das Verschwenken der Lamellen erfolgt über einen gemeinsamen Antrieb, der seitlich der Lamellen angeordnet ist. Der Antrieb ist direkt mit der Achse einer der Lamellen verbunden und die restlichen Lamellen sind über ein Gestänge mit diesem Antrieb verbunden und so gleichzeitig verschwenkbar. Die bekannte Vorrichtung ist sehr aufwendig konstruiert. Sie hat den weiteren Nachteil, daß sie für die Belüftung von Wohnräumen und Küchen nicht geeignet ist, da bei geöffneter Stellung der Lamellen der hinter diesen Lamellen angeordnete Lüftungsschacht sichtbar wird. Ein weiterer Nachteil der bekannten Lüftungsvorrichtung liegt darin, daß der Antrieb und das mit dem Antrieb verbundene Gestänge zu störanfällig ist.

Aus der US-A-35 92 240 ist eine Lüftungsvorrichtung zur Belüftung von Räumen mit einem Lüftungsgitter mit in Abstand voneinander angeordneten fest installierten kreisbogenförmig ausgebildeten Stegen bekannt. Die Lüftungsvorrichtung ist mittels zwei an einer Verstelleinrichtung gelagerten schwenkbaren Abdeckplatten abdeckbar. Die Abdeckplatten sind jeweils formgleich ausgebildet. Die Verstelleinrichtung ist über seitliche Flansche an einer Basisplatte der Lüftungsvorrichtung befestigt. Im Zentrum der Verstelleinrichtung ist ein Hohlgewinde angeordnet, in das ein Vierkantschaft eingesetzt ist. An dem dem Schaft entgegengesetzten Ende des Gewindes greifen die Abdeckplatten in das Gewinde ein. Die Verstellung der Abdeckplatten erfolgt durch eine entsprechende Verdrehung des Gewindebolzens. Die Art der Halterung der Abdeckplatten und der Mechanismus zum Verstellen der Abdeckplatten ist konstruktiv sehr aufwendig und daher kostspielig ausgebildet. Darüber hinaus sind die Einzelteile der Verstelleinrichtung wegen der Reibverluste zwischen den sich bewegenden Teilen beim Umsetzen der Drehbewegungen des Steuergliedes einerseits und der Abdeckplatten andererseits einer relativ hohen Verschleißanfälligkeit ausgesetzt.

Der Erfindung liegt daher die Aufgabe zugrunde, eine Lüftungsvorrichtung zur Belüftung von Räumen mit einem Lüftungsgitter mit in Abstand voneinander angeordneten fest installierten Stegen und zwei formgleich ausgebildeten, mittels einer das Lüftungsgitter in Luftstromrichtung durchsetzenden Verstelleinrichtung stufenlos schwenkbaren Abdeckplatten, die die durch die Lüftungsvorrichtung strömende Luft regulieren, zu schaffen, die leicht herstellbar ist, aus einfachen, störunanfälligen Baubestandteilen zusammensetzbar ist und bei der trotzdem eine einwandfreie und besonders einfache Zugregulierung bzw. Regulierung der Luftdurchlaßmenge gewährleistet ist.

Die Aufgabe wird bei der eingangs angegebenen Lüftungsvorrichtung durch die Merkmale des kennzeichnenden Teils von Anspruchs 1 gelöst.

Die erfindungsgemäße Lüftungsvorrichtung hat den Vorteil, daß sie eine einwandfreie Regulierung der jeweils gewünschten Luftdurchlaßmenge ermöglicht, und zwar mittels einer sehr einfach konstruierten und völlig störunanfälligen Verstelleinrichtung. Die Abdeckung für die Lüftungsschlitze ist so ausgebildet und angeordnet, daß sie von außen nicht sichtbar ist und somit das äußere Erscheinungsbild des Lüftungsgitters nicht beeinträchtigt. Die erfindungsgemäße Lüftungsvorrichtung gewährleistet im geöffneten Zustand einen gleichbleibenden Luftstromdurchlaß. Ein weiterer Vorteil liegt darin, daß die erfindungsgemäße Lüftungsvorrichtung eine geringe Einbautiefe aufweist, da die Abdeckung der Lüftungsschlitze im Innern der Vorrichtung angebracht ist und in das Innere des Lüftungskanals hin geöffnet wird. Die durch die Lüftungsschlitze vorgegebene Luftdurchlaßmenge wird durch die Abdeckung im geöffneten Zustand nicht beeinträchtigt. Dies ist insbesondere bei Lüftungsgittern mit kleinem Durchmesser von besonderer Bedeutung.

Die Abdeckung der Lüftungsschlitze besteht aus zwei Abdeckplatten, die auf der Rückseite des Lüftungsgitters angeordnet sind. Die Gesamtfläche der Abdeckelemente bzw. der Abdeckplatten ist so ausgelegt, daß die Gesamtfläche der Luftdurchlaßschlitze abdeckbar ist. Die Abdeckung ist zweiteilig ausgebildet, wobei die Abdeckplatten vorzugsweise einen viereckigen oder halbrunden Querschnitt aufweisen.

Die Abdeckplatten sind getrennt voneinander und nebeneinander angeordnet, wobei bei den halbrunden Platten die geraden Kanten parallel nebeneinander und aufeinander zugerichtet angeordnet sind.

Die auf der Rückseite des Lüftungsgitters angeordneten Abdeckplatten sind stufenlos verschwenkbar, wobei die Platten beim Öffnen der Lüftungsvorrichtung nach innen in den Lüftungskanal hineingeschwenkt werden, und zwar so, daß jede Stellung zwischen völlig geöffnet und gesperrt eingenommen werden kann.

Die Abdeckplatten sind über Rastelemente, die an den Abdeckplatten angebracht sind, schwenkbar mit den Stegen des Lüftungsgitters zu verbinden. Die Rastelemente bestehen insbesondere aus flachen Stützen, die einstückig mit den Abdeckplatten verbunden sind und die an den Enden zu rotationssymmetrischen Verdickungen, die als Drehlager dienen, auslaufen. Die rotationssymmetrischen Verdickungen sind vorzugsweise breiter als die Stützen. Dies hat den Vorteil, daß die Abdeckplatten einen größeren Schwenkwinkel durchlaufen können.

Die Stege, bzw. Lamellen des Lüftungsgitters sind quer zur Strömungsrichtung des Luftstroms angeordnet, wobei jeweils ein Steg mit einem Lüftungsschlitz abwechselt. Die Stege bestehen vorzugsweise aus formstabilem Kunststoff oder Metall. Auf der Innenseite mindestens eines Steges, das heißt auf der Seite, die dem Lüftungskanal zugewandt ist, sind mindestens zwei Halteelemente für die schwenkbare Lagerung der Abdeckplatten vorgesehen. Zur Erhöhung der Stabilität der Stege können diese z. B. einen dreieckigen Querschnitt aufweisen. Es ist weiterhin möglich, die parallel zueinander angeordneten Stege durch einen zusätzlichen senkrecht dazu verlaufenden Steg zu versteifen.

Die Halteelemente können einstückig oder auch lösbar mit dem Steg verbunden sein. Die Halteelemente bestehen vorzugsweise aus senkrecht vom Steg abstehenden Platten, in deren Oberkanten Einkerbungen eingelassen sind. Die Einkerbungen enthalten eine Einschnürung zur Einrastung der Rastelemente der Abdeckplatten.

In der Mitte des Lüftungsgitters ist eine Führungsbuchse mit einer vorzugsweise zylinderförmigen, durchgehenden Öffnung vorgesehen zur Durchführung einer Verstelleinrichtung für die Abdeckplatten. Die Verstelleinrichtung besteht vorzugsweise aus einem zweiteiligen Zapfen. Der Zapfen ist quer zur Längsrichtung teilbar, z. B. an der Verbindungsstelle des verbreiterten Kopfstückes mit dem Mittelteil, in Höhe des Mittelteils, an der umlaufenden Nut oder in Höhe der Abschlußscheibe des Zapfens. Die Einzelteile des Zapfens können vorzugsweise durch eine Schraubverbindung, Klips- oder Klappverbindung miteinander verbunden werden. In die Nut des Stiftes werden die Außenkanten der Abdeckplatten eingeschoben und beim Verschieben des Stiftes nach innen, bzw. außen werden die Abdeckplatten verschwenkt und somit werden die Lüftungsschlitze abgedeckt oder geöffnet. Diese Art der Abdeckung bzw. der Öffnung der Lüftungsschlitze ist besonders einfach und sehr wenig störanfällig.

Der Verstellzapfen wird in die Führungsbuchse des Lüftungsgitters eingeschoben und auf diese Weise im Lüftungsgitter gehalten.

Die erfindungsgemäße Lüftungsvorrichtung wird anhand der folgenden Zeichnungen erläutert. Es zeigen:

Fig. 1 die perspektivische Ansicht einer erfindungsgemäßen Lüftungsvorrichtung,

Fig. 2 einen Querschnitt durch die erfindungsgemäße Lüftungsvorrichtung in Kombination mit einem angeschlossenen Lüftungsrohr,

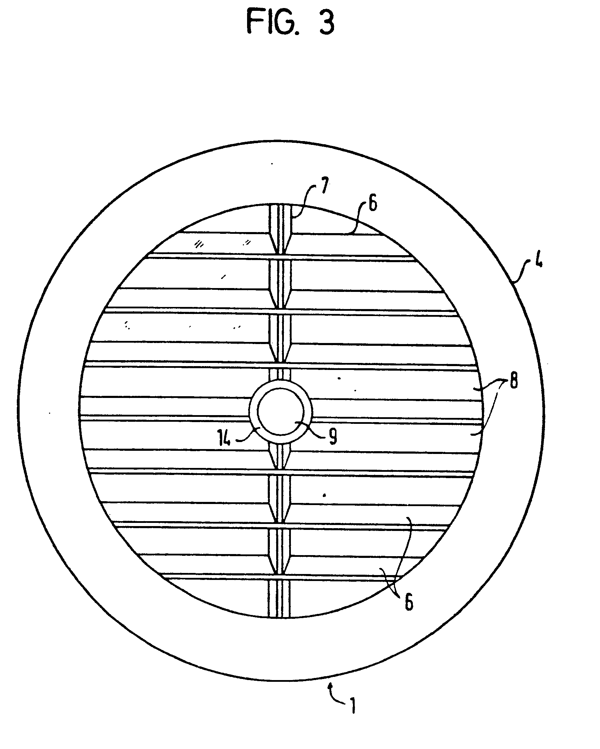

Fig. 3 die Draufsicht auf die Außenseite des Lüftungsgitters der erfindungsgemäßen Lüftungsvorrichtung,

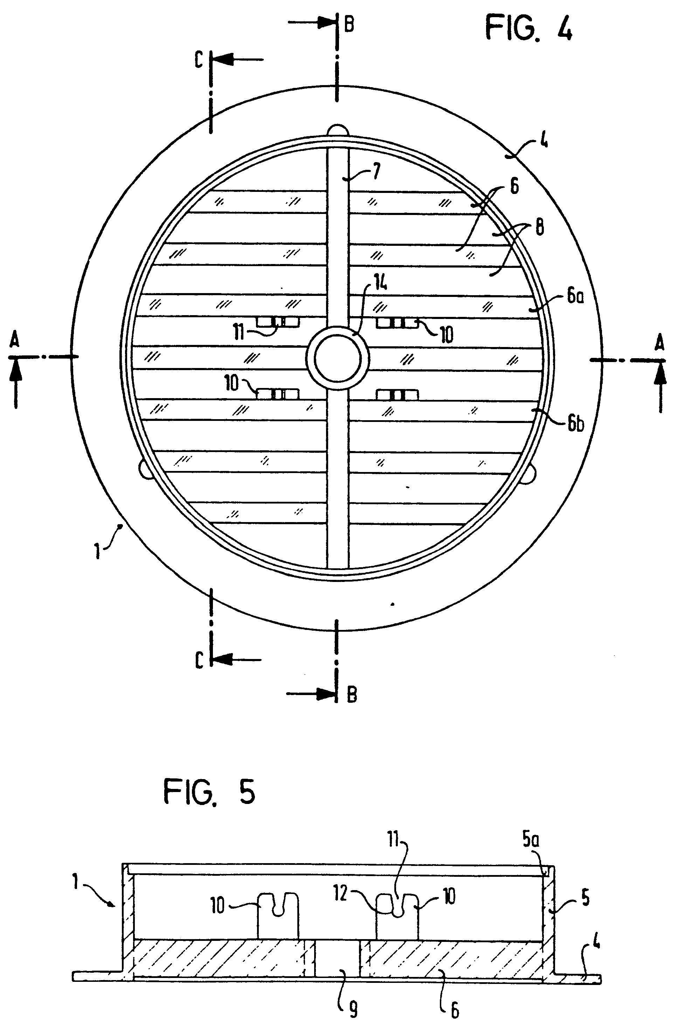

Fig. 4 die Draufsicht auf die Rückseite des Lüftungsgitters,

Fig. 5 einen Querschnitt durch das Lüftungsgitter gemäß Fig. 4 entlang der Linie A/A,

Fig. 6 einen Querschnitt durch das Lüftungsgitter gemäß Fig. 4 entlang der Linie B/B,

Fig. 7 einen Schnitt durch das Lüftungsgitter der erfindungsgemäßen Vorrichtung gemäß Fig. 4 entlang der Linie C/C,

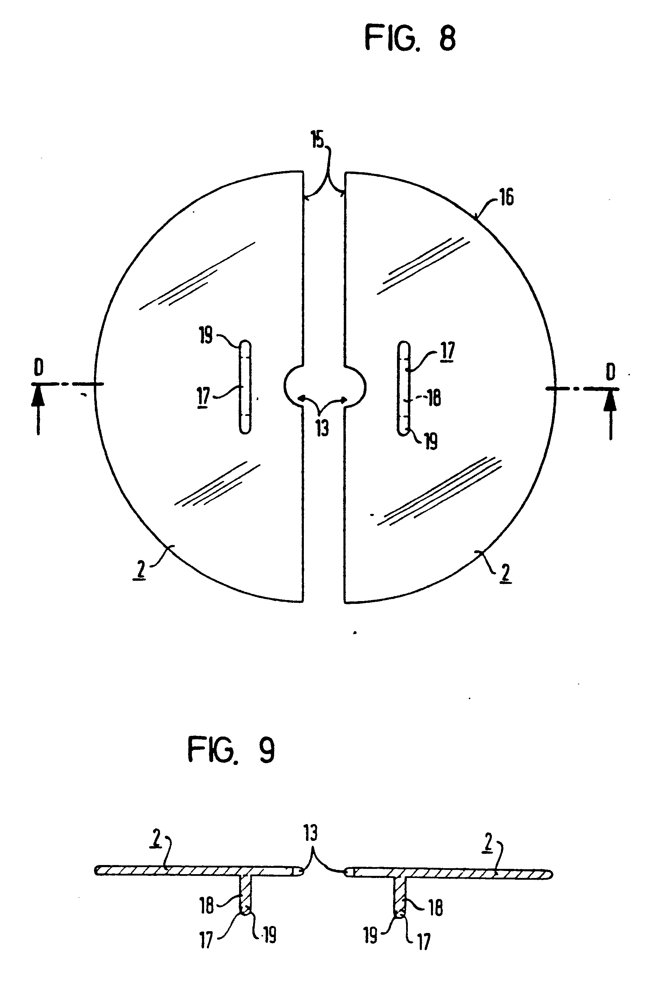

Fig. 8 eine Draufsicht auf die Abdeckplatten der erfindungsgemäßen Vorrichtung,

Fig. 9 einen Schnitt durch die Abdeckplatten in Fig. 8 entlang der Linie D/D,

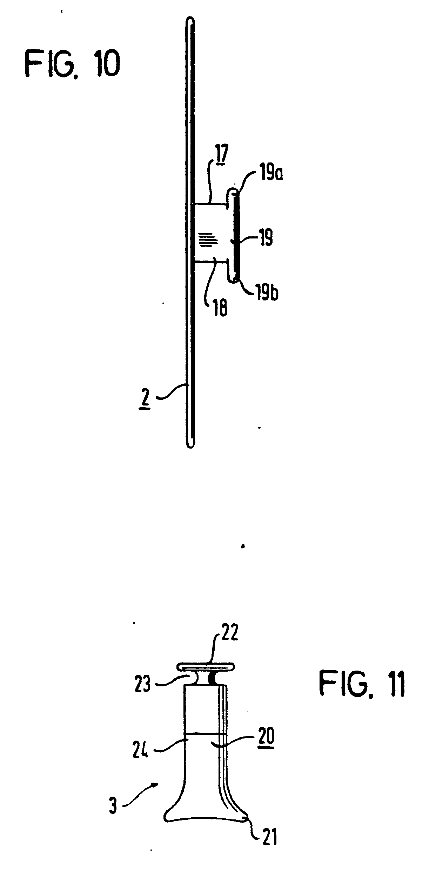

Fig. 10 eine Seitenansicht einer Abdeckplatte gemäß Fig. 8,

Fig. 11 einen Querschnitt durch die Verstelleinrichtung der erfindungsgemäßen Lüftungsvorrichtung.

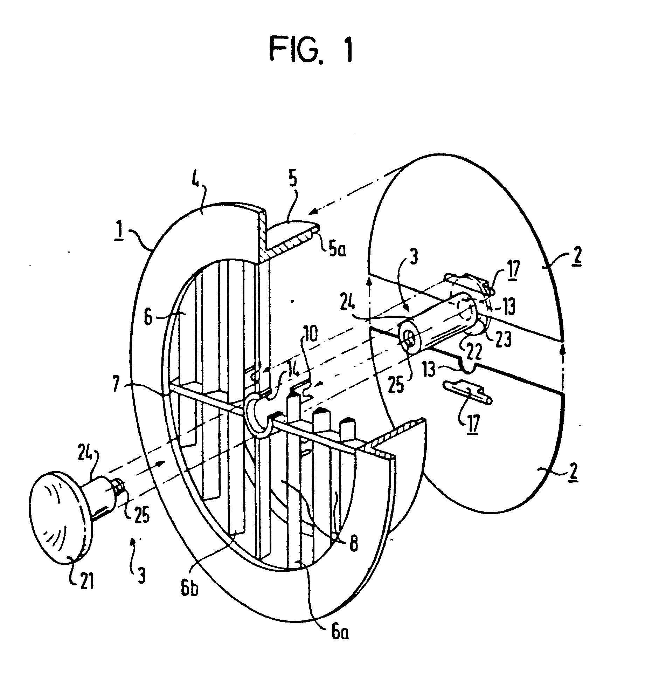

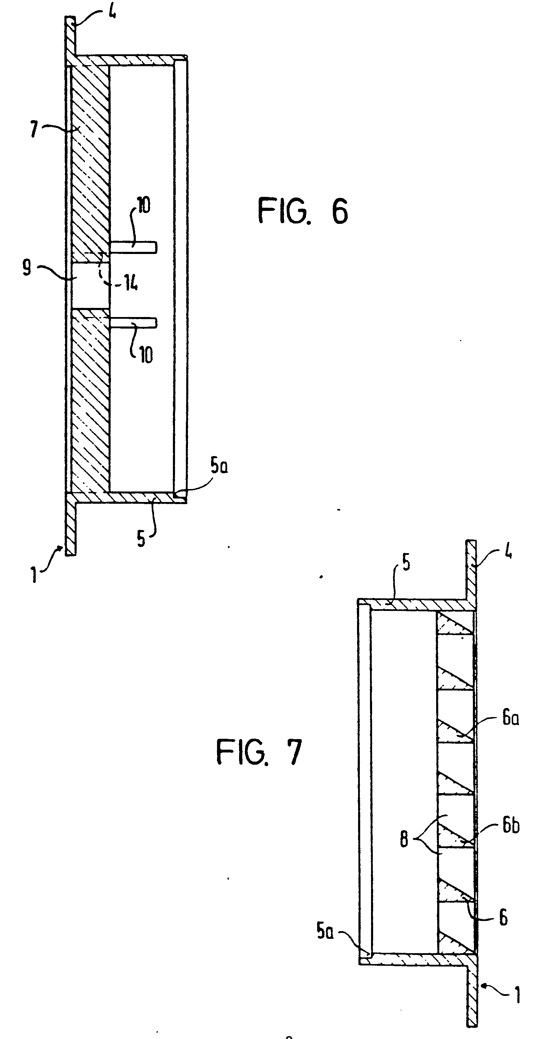

Die Fig. 1 zeigt eine Ausgestaltungsform der erfindungsgemäßen Lüftungsvorrichtung mit dem Lüftungsgitter, das insgesamt mit 1 bezeichnet ist, den Abdeckplatten 2 und der Verschiebeeinrichtung 3. Das Lüftungsgitter besteht aus einem Flansch 4, der an einem Stutzen 5 angeordnet ist. In dem Stutzen 5 sind in Höhe des Flansches 4 durchgehende Stege bzw. Lamellen 6 angeordnet, die vorzugsweise aus einem formstabilen Kunststoff oder aus Metall bestehen. Die Lamellen haben vorzugsweise einen dreieckigen Querschnitt (siehe Fig. 7). Zur Versteifung ist senkrecht zu den Stegen 6 ein durchgehender Steg 7 vorgesehen, der die parallel zueinander angeordneten fest installierten Stege 6 miteinander verbindet. Zwischen den parallel zueinander angeordneten Stegen 6 sind Lüftungsschlitze 8 vorgesehen. In der Mitte des Lüftungsgitters ist eine durchgehende Buchse 14 angeordnet, die der Führung der Verstelleinrichtung 3 dient.

Auf, bzw. an den beiden neben dem Mittelsteg angeordneten Stegen 6a und 6b sind Halteelemente 10 vorgesehen, die vorzugsweise einstückig mit den Stegen verbunden sind. Die Halteelemente 10 können jedoch auch in die Stege einsteckbar sein. Sie sind jedoch vorzugsweise mit den Stegen verklebt. Die Halteelemente bestehen vorzugsweise aus senkrechten, schmalen Plättchen, die an der oberen Kante mit einer Einkerbung 11 ausgerüstet sind. Die Einkerbung weist im unteren Teil eine Einschnürung 12 auf.

Der Durchmesser des Lüftungsgitters beträgt vorzugsweise 100 mm und die Lüftungsschlitze sind vorzugsweise 5 bis 12 mm breit. Der Stutzen weist vorzugsweise eine Höhe von 20 bis 40 mm, insbesondere 28 mm auf.

Das Lüftungsgitter 1 ist in der Mitte mit einer Führungsbuchse 14 für die Führung der Verstelleinrichtung 3 ausgerüstet. Die Führungsbuchse 14 ist in der Mitte des senkrecht zu den Lamellen 6 angeordneten Versteifungsstegs 7 angeordnet. Die Höhe der Führungsbuchse entspricht der Höhe der Lamellen 6, bzw. des Versteifungsstegs 7. Die Lamellen 6 weisen vorzugsweise eine Höhe von 8 bis 12 mm auf. Die Wandstärke der Führungsbuchse 14 beträgt vorzugsweise 2 bis 4 mm. Die Lamellen 6 sind insbesondere dreieckig ausgebildet, wobei die Grundfläche etwa 5 mm und die Oberkante etwa 1 mm breit ist.

Die oben angegebenen Maße sind bevorzugte Werte für die in den Zeichnungen abgebildete Lüftungsvorrichtung. Bei einer entsprechend größer dimensionierten Lüftungsvorrichtung sind die Maße entsprechend größer.

Die Abdeckplatten 2 sind vorzugsweise halbrundförmig ausgebildet. In der Mitte der Innenkante sind die Abdeckplatten mit einer Ausnehmung 13 ausgerüstet, die in die Nut 23 der Verstelleinrichtung 3 eingreift. Die Ausnehmung 13 befindet sich auf der Innenkante 15 der Abdeckplatte. Die Außenkante 16 der Abdeckplatte ist halbrundförmig ausgebildet und liegt auf einer Abstufung 5a des Stutzens 5 auf, wenn die Lüftungsvorrichtung geschlossen ist. Durch das Einfügen der Außenkante der Abdeckplatten in die Abstufung 5a des Stutzens 5 des Lüftungsgitters 1 wird eine sehr gute Abdichtung der Lüftungsvorrichtung im geschlossenen Zustand gewährleistet.

An der Abdeckplatte ist jeweils ein Rastelement 17 angeordnet, das vorzugsweise aus einer flachen, ebenen Stütze 18 besteht, die einstückig mit der Abdeckplatte 2 verbunden ist. Die Stütze 18 läuft am oberen Ende zu einer rotationssymmetrischen Verdickung 19 aus, die in die Einschnürung 12 der Halteelemente 10 einrastbar ist. Die rotationssymmetrische Verdickung 19 ist breiter als die Stütze und die äußeren Enden 19a der Verdickung sind in die Einschnürungen der Halteelemente 10 eingerastet, damit die Schwenkbewegung der Abdeckplatten nicht behindert wird.

Die Halteelemente 10 sind parallel nebeneinander angeordnet, und zwar in einem Abstand, der so groß ist, daß die Endstücke 19a der Verdickung 19 in die plattenförmigen Halteelemente einrastbar sind. Es ist auch möglich, die Halteelemente auf weiter voneinander angeordneten Stegen anzuordnen. In diesem Fall muß das Rastelement 17 mit der Verdickung 19 jedoch so groß ausgebildet werden, daß die Endstücke der Verdickung 19 in die Einkerbungen 11 der Halteelemente einrastbar sind.

Die Verstelleinrichtung 3 besteht aus einem zweiteiligen Zapfen 20. Der Zapfen 20 besteht aus einem vorzugsweise zylinderförmigen Mittelteil 24, das an einem Ende von einem verbreiterten Kopfstück 21 begrenzt ist. Das andere Ende des Mittelteils wird durch eine umlaufende Nut 23 gebildet, die dann von einer Abschlußscheibe 22 begrenzt ist. Das Kopfstück 21 und die Abschlußscheibe 22 weisen einen größeren Querschnitt als das Mittelteil 24 auf. Das Mittelteil 24 weist einen Querschnitt auf, der in die Führungsbuchse 14 einpaßbar ist und darin gleitend verschiebbar ist. Das Mittelteil 24 ist trennbar, wobei die beiden Teile über eine Schraubverbindung 25 zusammensetzbar sind.

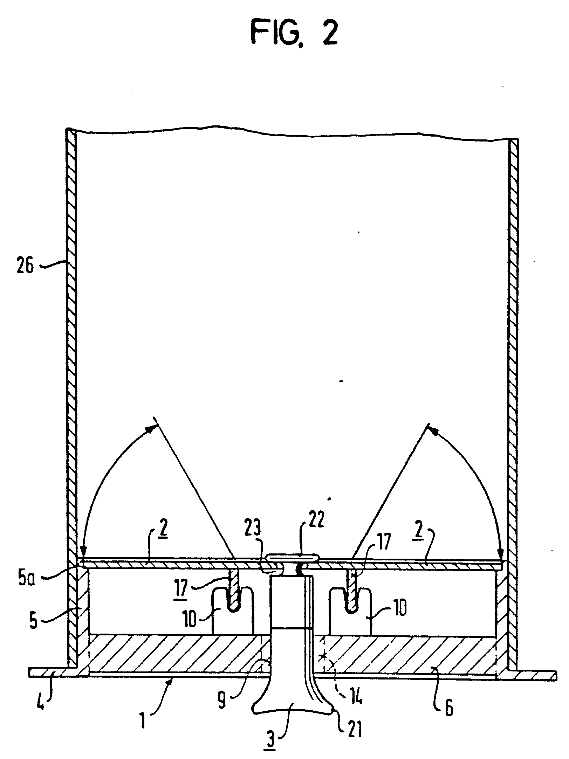

Das Schließen der Lüftungsvorrichtung erfolgt dadurch, daß die Verstelleinrichtung 3 vollständig durch die Öffnung 9 nach innen in Richtung des Lüftungskanals verschoben wird, bis die Abdeckplatten 2 an den Abstufungen 5a des Stutzens 5 anschlagen. Die gewünschte Öffnungsstellung der Lüftungsvorrichtung wird dadurch erreicht, daß die Verstelleinrichtung aus der Öffnung 9 etwas herausgezogen wird, bis die gewünschte Öffnungsstellung erreicht ist, und zwar erfolgt diese dadurch, daß die Abschlußscheibe 22 die Innenkanten 15 der Abdeckplatten 2 nach unten drückt und dadurch die Abdeckplatten aufschwenkt (vergleiche Fig. 2).

Die erfindungsgemäße Lüftungsvorrichtung kann in entsprechend dimensionierte Lüftungsrohre eingesetzt werden, die in der Wand, bzw. Decke installiert sind. Die Lüftungsrohre können entweder starr oder teleskopartig ausgebildet sein. Anstelle der Lüftungsrohre können auch Lüftungsschächte verwendet werden. In diesem Fall ist das Lüftungsgitter den äußeren Dimensionen des Lüftungsschachtes angepaßt. Die Lüftungsrohre weisen vorzugsweise einen Durchmesser von 100, bzw. 110 mm auf.

**Patentansprüche**

1. Lüftungsvorrichtung zur Belüftung von Räumen mit einem Lüftungsgitter (1) mit in Abstand voneinander angeordneten, fest installierten Stegen (6) und zwei formgleich ausgebildeten, sich an Innenkanten (15) gegenüberliegenden und mittels einer das Lüftungsgitter in Luftstromrichtung durchsetzenden Verstelleinrichtung (3) stufenlos schwenkbaren Abdeckplatten (2), die die durch die Lüftungsvorrichtung strömende Luft regulieren,
dadurch gekennzeichnet, daß die beiden Abdeckplatten (2) an den Stegen (6) des Lüftungsgitters (1) gelagert sind, wobei die Lagerung jeder Abdeckplatte (2) für sich zentrumsnah mittels an ihrer dem Lüftungsgitter (1) zugekehrten Seite angebrachter Rastelemente (17) in pfannenartigen, auf der stromaufwärtigen Seite des Lüftungsgitters (1) angeordneten Halteelementen (10) vorgenommen ist, und daß an dem stromaufwärtigen Ende der Verstelleinrichtung (3) eine umlaufende Nut (23) angebracht ist, in die die Innenkanten (15) der beiden Abdeckplatten (2) eingreifen.

2. Lüftungsvorrichtung nach Anspruch 1, dadurch gekennzeichnet, daß die Rastelemente (17) aus Stützen (18) bestehen, die an den Enden zu rotationssymmetrischen Verdickungen (19), die als Drehlager dienen, auslaufen.

3. Lüftungsvorrichtung nach Ansprch 2, dadurch gekennzeichnet, daß die Verdickungen (19) über den Außenrand der Stützen (18) hinausragen.

4. Lüftungsvorrichtung nach Anspruch 1, dadurch gekennzeichnet, daß die Innenkanten (15) der Abdeckplatten (2) eine mittig angeordnete Ausnehmung (13) für die Durchführung der Verstelleinrichtung (3) aufweisen.

5. Lüftungsvorrichtung nach einem der vorhergehenden Ansprüche, dadurch gekennzeichnet, daß mindestens ein Steg (6) auf der stromaufwärtigen Seite des Gitters mit zwei Halteelementen (10) für die schwenkbare Lagerung der Abdeckplatten (2) ausgerüstet ist.

6. Lüftungsvorrichtung nach Anspruch 3, dadurch gekennzeichnet, daß die pfannenartigen Halteelemente (10) als senkrecht vom Steg (6) abstehende Stützen ausgebildet sind, wobei in den von den Stegen (6) abgewandten Oberkanten der Halteelemente (10) jeweils eine Einkerbung (11) eingelassen ist, die eine Einschnürung (12) zur Einrastung der Verdickung (19) der Rastelemente (17) aufweist.

7. Lüftungsvorrichtung nach Anspruch 1, dadurch gekennzeichnet, daß die Verstelleinrichtung (3) aus einem zweiteiligen Zapfen (20) gebildet ist, dessen Mittelteil (24) zylinderförmig ausgebildet ist, wobei der Durchmesser des Mittelteils (24) dem Durchmesser einer Öffnung (9) im Lüftungsgitter (1) angepaßt ist, und daß stromaufwärts hinter der Nut (23) eine Abschlußscheibe (22) vorgesehen ist.

8. Lüftungsvorrichtung nach Anspruch 7, dadurch gekennzeichnet, daß die Abschlußscheibe (22) in den Zapfen (20) der Verstelleinrichtung (3) eingeschraubt ist.

9. Lüftungsvorrichtung nach einem der vorhergehenden Ansprüche, dadurch gekennzeichnet, daß die Verstelleinrichtung (3) in Sperrstellung der Abdeckplatten (2) vollständig in eine mittig angeordnete Buchse (14) des Lüftungsgitters (1) hineingeschoben ist und bei geöffneter Stellung der Abdeckplatten (2) entsprechend weit aus der Buchse (14) des Lüftungsgitters (1) herausgezogen ist.

## Claims

1. Ventilating device for the ventilation of roome, with a ventilation grille (1) with spaced apart and fixed bars (6), and two identical cover plates (2) which face each other on inside edges (15) and can be steadily swivelled by means of an adjusting device (3) which passes through the ventilation grille (1), in the direction of the airflow characterised in that each cover plate (2) is carried on a bar (6) of the ventilation grille (1) whereby the bearing of each plate (2) is arranged substantially centrally of the adjacent side of the grille by means of locking elemente (17), which are provided on the side facing the ventilation grille (1) in luglike retaining elements (10) which are located on the upstream side of the ventilation grille (1) and that at the upstream end of the adjusting device (2) circular groove (23) is present in which the inside edges (15) of two cover plates (2) engage.

2. Ventilating device according to Claim 1, characterised in that the locking elements (17) comprise supports (18), which at the ends are formed into rotationally symmetrical thickened sections (19) which serve as pivot bearings.

3. Ventilating device according to Claim 2, characterised in that the thickened sections (19) project beyond the outer edges of the supports (18).

4. Ventilating device according to Claim 1, characterised in that the inside edges (15) of the cover plates (2) have a cavity (13) arranged centrally for through passage of the adjusting device (3).

5. Ventilating device according to any one preceding Claim, characterised in that one bar (6) on the upstream side of the grille is equipped with two retaining elements (10) for the revolving mounting of the cover plates (2).

6. Ventilating device according to Claim 3, characterised in that the luglike retaining elements (10) are constructed as posts projecting perpendicularly from the rib (6), and an indentation is made in each of the top edges remote from the ribs (6), which has a reduction (12) for engaging the thickened section (19) of the locking elements (17).

7. Ventilating device according to Claim 1, characterised in that the adjusting device (3) is formed from a two part socket (20) whose middle part (24) is cylindrical in construction, whereby the diameter of the middle part (24) matches the diameter of an aperture (9) in the ventilation grille (10) and that a closing disc (22) is provided upstream behind that groove (23).

8. Ventilating device according to Claim 7, characterised in that the closing disc (22) is screwed into the socket (20) of the adjusting device (3).

9. Ventilating device according to one of the preceding Claims, characterised in that the adjusting device (3), in the locking position of the cover plates (2), is fully inserted into a centrally arranged bush (14) of the ventilation grill (1), and in the opened position of the cover plates (2), is withdrawn to the appropriate extent from the bush (14) of the ventilation grille (1).

## Revendications

1. Dispositif d'aération pour aérer des locaux, comportant une grille d'aération (1) munie d'ailettes (6) fixées à une certaine distance les unes des autres, et deux volets de recouvrement (2), de forme identique, ayant leurs arêtes intérieures (15) en vis-à-vis et pouvant pivoter progressivement au moyen d'un dispositif de réglage (3) traversant la grille d'aération dans le sens du courant d'air, lesquels volets règlent le courant d'air s'écoulant à travers le dispositif d'aération, caractérisé en ce que les deux volets de recouvrement (2) sont montés sur les ailettes (6) de la grille d'aération (1), que le positionnement de chaque volet de recouvrement (2) est effectué individuellement près du centre au moyen d'éléments d'encliquetage (17) fixés, sur son côté tourné vers la grille d'aération (1), dans des éléments de support (10) en forme de coussinets disposés sur le côté amont de la grille d'aération (1), et en ce qu'on place à l'extrémité amont du dispositif de réglage (3) une gorge (23) qui en fait le tour dans laquelle pénètrent les arêtes intérieures (15) des deux volets de recouvrement (2).

2. Dispositif d'aération selon la revendication 1, caractérisé en ce que les éléments d'encliquetage (17) sont constitués par des supports (18) qui, aux extrémités, se terminent par des parties prolongées de révolution (19), qui servent de paliers de basculement.

3. Dispositif d'aération selon la revendication 2, caractérisé en ce que les parties prolongées (19) dépassent au-delà du bord extérieur des supports (18).

4. Dispositif d'aération selon la revendication 1, caractérisé en ce que les arêtes intérieures (15) des volets de recouvrement (2) comportent un évidement (13) disposé au centre pour le passage du dispositif de réglage (3).

5. Dispositif d'aération selon l'une des revendications précédentes, caractérisé en ce qu'au moins une ailette (6) est munie, sur le côté amont de la grille, de deux éléments de support (10) pour le montage à pivotement des volets de recouvrement (2).

6. Dispositif d'aération selon la revendication 3, caractérisé en ce que les éléments de support (10) en forme de coussinets sont réalisés sous forme de supports s'écartant perpendiculairement de l'ailette (6), une encoche (11) étant chaque fois ménagée dans les arêtes supérieures des éléments de support (10) opposées aux ailettes (6), laquelle encoche comporte un étranglement (12) pour l'encliquetage de la partie prolongée (19) des éléments d'encliquetage (17).

7. Dispositif d'aération selon la revendication 1, caractérisé en ce que le dispositif de réglage (3) est constitué par une broche (20) en deux parties, dont la partie médiane (24) est de forme cylindrique, le diamètre de la partie médiane (24) étant adapté au diamètre d'une ouverture (9) dans la grille d'aération (1), et un disque d'obturation (22) étant prévu derrière la gorge (23).

8. Dispositif d'aération selon la revendication 7, caractérisé en ce que le disque d'obturation (22) est vissé dans la broche (20) du dispositif de réglage (3).

9. Dispositif d'aération selon l'une des revendications précédentes, caractérisé en ce que le dispositif de réglage (3), en position fermée des volets de recouvrement (2), est entièrement introduit dans un manchon (14) de la grille d'aération (1) disposé au milieu et, en position ouverte des volets de recouvrement, il est sorti d'une longueur correspondante hors du manchon (14) de la grille d'aération (1).

# FIG. 1

# FIG. 2

## FIG. 3

FIG. 4

FIG. 5

FIG. 6

FIG. 7

# FIG. 8

# FIG. 9

FIG. 10

17
19a
19
18
19b
2

FIG. 11

22
23
20
24
3
21